# EUROPEAN PATENT SPECIFICATION

(11) **EP 2 084 000 B1**
(45) Date of publication and mention of the grant of the patent: **13.02.2019**
(21) Application number: 07852840.3
(22) Date of filing: 18.10.2007
(51) Int. Cl.: B32B 9/00, C23C 24/00

(54) **METHODS AND APPARATUS FOR MAKING COATINGS USING ELECTROSTATIC SPRAY**
VERFAHREN UND VORRICHTUNG ZUR HERSTELLUNG VON BESCHICHTUNGEN MITHILFE EINES ELEKTROSTATISCHEN SPRAYS
PROCÉDÉS ET APPAREILS POUR LA RÉALISATION DE REVÊTEMENTS PAR PULVÉRISATION ÉLECTROSTATIQUE

(30) Priority: 19.10.2006 US 852931 P
(43) Date of publication of application: 05.08.2009
(73) Proprietor: The Board of Trustees of The University of Arkansas, Little Rock, AR 72207-3608 (US); NanoMech, Inc., Fayetteville, AR 72701 (US)
(72) Inventor: MALSHE, Ajay P., Springdale, AR 72762 (US); JIANG, Wenping, Fayetteville, AR 72703 (US); LOWREY, Justin B., Fayetteville, AR 72701 (US)
(74) Representative: Ellis, Katherine Elizabeth Sleigh
(86) International application number: PCT/US2007/022220
(87) International publication number: WO 2008/051433

(56) References cited:
- US-A- 3 786 309
- US-A- 3 930 062
- US-A1- 2003 025 014
- US-A1- 2004 018 238
- US-A1- 2005 244 644
- US-A1- 2006 193 890
- US-A1- 2006 199 013
- US-A1- 2006 199 013
- US-B1- 6 852 948
- US-B1- 6 852 948
- US-B1- 7 052 532

## Description

This application claims priority from U.S. provisional patent application serial number 60/852,931, entitled "Methods and Apparatus for Making Coatings Using Electrostatic Spray," and filed on October 19, 2006.

### Background of the Invention

The present invention relates to methods for making coatings and articles from various material compositions involving use of electrostatic spray as the core method of coating deposition. These coatings may be used for a variety of applications, including as examples: abrasion-resistant coatings for cutting tools and wear parts, solid lubricant coatings for tools and wear parts, bio-friendly or biocidal coatings for biomedical implants, and thin film coatings for microelectronics, among others. Using the processes and equipment designs described in the detailed description section hereof, coatings may be applied to many different substrate materials and parts having simple or complex 3-dimensional geometries.

U.S. Pat. No. 6,607,782 issued August 19, 2003 to Ajay P. Malshe, et al., disclosed a method that uses electrostatic spray coating (ESC) to deposit a base layer or preform on a substrate, followed by chemical vapor infiltration (CVI) to introduce a binder phase that creates a composite coating with good adherence of the binder to the initial phase particles and adherence of the composite coating to the substrate.

### Summary of the Invention

The present invention comprises additional methods for creating coatings composed of a single material or a composite of multiple materials, beginning with ESC to deposit the base layer and then using other methods for the binding step beyond CVI. ESC followed by CVI has been used successfully for creating composite coatings comprised of cubic boron nitride (cBN) and titanium nitride (TiN), on carbide substrates. However, because CVI exposes the substrate to high temperatures it is not suitable for certain materials that may be damaged or their properties degraded by the high temperature. Also, CVI as a binding step is not practical for applications involving very large surface areas due to the limited size of CVI reactors. Due to these and other limitations, we have devised additional means of applying a second phase to initial green coatings deposited using ESC. The new two-step coatings processes that result are disclosed in this application.

Also, for certain materials and applications, some pre-processing or pre-treatment of the coating materials is necessary prior to deposition in order to achieve a satisfactory coating. The invention in various embodiments comprises methods for pre-deposition treatment of materials prior to ESC deposition. It also comprises in various embodiments methods for post-processing that provide additional functionality or performance characteristics of the coating.

### Brief Description of the Drawings

Figure 1 illustrates the two-step coating process, including an initial deposition of a base or green coating layer, followed by a post-deposition treatment step.
Figure 2 shows the case in which a pre-deposition treatment is applied to the coating materials prior to deposition.
Figure 3 illustrates a fluidizer, used to separate dry powder particles, avoid agglomeration, and preferentially feed ultrafine particles to the deposition system.
Figure 4 illustrates a jet mill, which helps de-agglomerate powders using aerodynamic forces.
Figure 5 shows an aerosol spray used to de-agglomerate powders as they are fed to the deposition system.
Figure 6 shows the deposition chamber used to contain the materials being deposited, preventing unacceptable release to the environment, allow for adjustment of spray gun to substrate distance, and capture and recycle of unused coating materials.
Figure 7 illustrates a rotating stage used to ensure uniform deposition of the coating on the substrate.
Figure 8 shows fluidization integrated with the deposition system including the chamber.
Figure 9 shows the jet mill integrated with the deposition system including the chamber.
Figure 10 illustrates a modified ESC gun design that minimizes accumulation of material inside the gun and improves uniformity of flow through the gun.

### Detailed Description of the Preferred Embodiments

Disclosed herein are methods and apparatus for producing a coating on a substrate, beginning with electrostatic spray to deposit a base- or green-coating layer.

### Two-Step Coating Processes - Overview

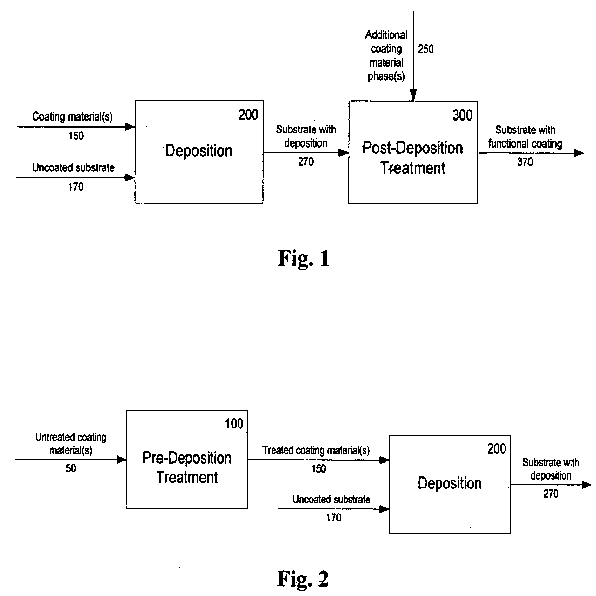

Figure 1 illustrates a two-step process for producing a coating on a substrate. The substrate 170 is placed in a deposition system 200. One or more coating materials 150 are introduced into the deposition system 200. These coating materials may be in dry powder or liquid suspension form, and may contain nano- or micro-sized particles or a combination of the two. Multiple materials may be combined together or introduced separately into the deposition system 200. A variety of materials can be used, including nitrides, carbides, carbonitrides, borides, oxides, sulphides and silicides.

The deposition system 200 may use any of several methods to produce an initial coating or base layer on the substrate. One such deposition method is electrostatic spray coating (ESC), as described in U.S. Pat. No. 6,544,599 issued April 8, 2003 to William D. Brown, et al., and U.S. Pat. No. 6,607,782 issued August 19, 2003 to Ajay P. Malshe, et al. ESC deposition may be done as dry powder spray, or as liquid spray using a dispersion of the coating material in a suitable carrier liquid.

A further ESC deposition method adapted for nanoparticle compositions is also described in U.S. Pat. No: 2006/0199013 published September 7, 2006. After the initial deposition step, dry solid particles of the coating material(s) are in contact with the substrate. The substrate with deposition 270 is the output of the deposition step 200 as illustrated in Figure 1.

The substrate 270 with deposition of a base layer then undergoes a post-deposition treatment step 300. Post-deposition treatment is used to bind the deposited dry particles to one another and to the substrate. Suitable treatment methods include:
- Chemical vapor infiltration (CVI), which is similar to chemical vapor deposition (CVD) but using a slower reaction rate such that the binder infiltrates the porous dry powder deposition, coming into contact with both the substrate and the dry particles; and
- Sintering, using any of several alternative sintering methods, singly or in combination, including:
   ∘ Microwave sintering
   ∘ Laser sintering
   ∘ Infrared sintering

Each of these methods applies one or more short bursts of high energy (microwave, laser, infrared, or high temperature and high pressure) to sinter the particles of the initial coating deposition, binding them to each other and to the substrate.

Another binding method is use of high temperature - high pressure (HT-HP), a process that is currently used for a variety of purposes including fabrication of polycrystalline cubic boron nitride (PCBN) solid compacts. In one embodiment of this invention, HT-HP is used as a post-deposition binding step to bind the deposited particles to each other and to the substrate.

In some embodiments, an additional treatment step (not shown in the figures) is applied after the post-deposition treatment step 300, to add an additional phase to the coating. One example of this is the use of electrostatic spray coating or ultrasonic spray deposition as a final step, after deposition and sintering of a base coating, for the purpose of applying active biological agents to the base coating. As a more specific example, a dental implant or other biomedical device, possibly with a porous surface layer, can be coated using ESC followed by microwave sintering of the base coating. Then in an additional post-sintering deposition step, an active agent can be applied, such as a biocidal or anti-bacterial agent, other active agents such as bone-morphogenic proteins, or particles carrying drugs for drug delivery at the surface of the device after implantation. These are just examples of how a post-processing step can be used to apply additional components to a base coating for specific purposes.

Other additional treatment steps (not shown in the figures) that can be applied after post-deposition treatment 300 can be used to enhance the binding of the coating and to reduce or eliminate defects and non-uniformities in the coating. For example, suitable treatments for hard coatings such as those used for cutting tools include high temperature - high pressure (HT-HP) and infrared sintering (pulsed infrared radiation). Other methods using transient energy sources also may be used to enhance the characteristics of the final coating on the substrate.

As shown in Figure 2, some embodiments of the invention include an optional pre-deposition treatment step 100. Untreated coating materials 50 are treated prior to being passed as treated coating materials 150 to the deposition system 200. Pretreatment may be used to de-agglomerate the coating material particles. The pretreatment methods disclosed here can be used to treat materials prior to coating deposition, or for other purposes independent of any coating deposition system.

As a pre-processing step prior to deposition, the pre-treatment methods disclosed herein may be used for any one or more of the following purposes:
- Fluidization, size discrimination and separation - fluidization helps maintain separation of dry powder particles, reduces agglomeration or clumping of particles, and allows preferentially feeding ultrafine particles or particles of smaller sizes; other methods for discriminating and preferentially feeding smaller particles also can be used.
- De-agglomeration - it is well known that ultrafine particles and nanoparticles in particular have a tendency to clump -together or agglomerate, forming clusters or 'agglomerates' that can be much larger than the base particle size. De-agglomerating the material helps reduce the number and size of clusters, which helps to maintain beneficial characteristics of nanosized particles, and improves the uniformity and surface roughness of the final coating when desired based on the application.
- Functionalization - particles can be functionalized for specific purposes.

### Methods and Apparatus for Pre-Deposition Treatment

Various methods and apparatuses for pre-deposition treatment of materials are described here. These may be used alone, or with the various deposition methods/systems described herein.

### Method and Apparatus for Fluidization

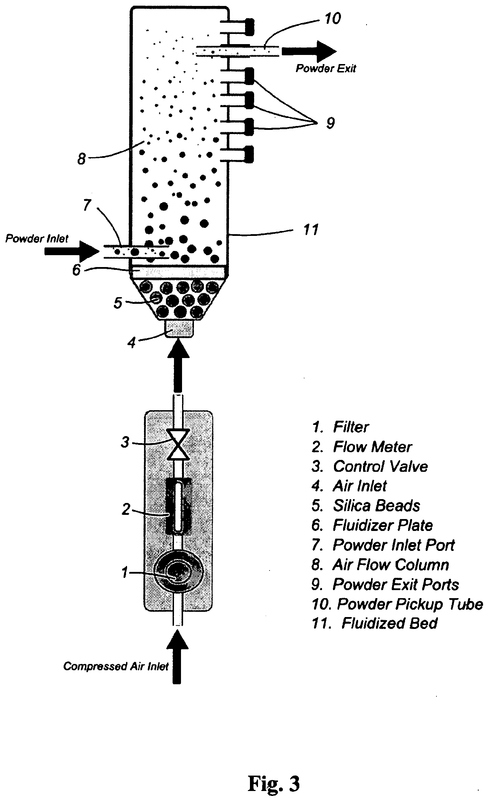

In one embodiment, dry powders consisting of nanoparticles, microparticles, or combinations thereof are fluidized using aerodynamic forces. Figure 3 illustrates this. A fluidized bed (11) receives incoming powder via one or more powder inlet ports (7). The incoming powder may contain particles of different sizes, all of which are introduced to the fluidized bed. A supply of compressed air is provided through a suitable filter (1), flowmeter (2) and control valve (3) to the fluidizer air inlet (4). The control valve and flowmeter allow for control of the air flow rate. The air passes through a bed of silica beads (5), which help ensure uniform gas flow across the flow area and also act as a desiccant (the beads are replaced periodically). The air then passes through a porous fluidizer plate (6) and enters the chamber above where the powder is introduced at the inlet port (7).

The air flow rate is adjusted such that aerodynamic forces place the powder particles in motion, with smaller particles rising to the top of the fluidized bed (11). The result is a vertical gradient of average particle size over the height of the air flow column (8), with larger particles residing toward the bottom of the column and smaller particles residing toward the top. Multiple powder exit ports (9) are provided, allowing for adjustment of the size of particles to be drawn from the fluidizer. A powder pickup tube (10) is placed in one of the exit ports (9) to remove particles from the fluidizer. The unused ports are capped. The provision of multiple exit ports provides the capability for preferentially feeding ultrafine powder particles by adjusting the position of the powder pick-up tube (moving it from one exit port to another). In this method, the fraction of particles that are ultrafine must be-balanced against deposition time due to the smaller mass flow rate of ultrafine particles.

In some embodiments, vibration also can be applied in combination with aerodynamic forces by incorporating vibrators (not shown) into the fluidizer. Vibration from the vibrators helps incite the additional movement of powder particles. The vibrators use mechanical vibrating energy created by a motor with an off-center mass rotating at high speed, or acoustical energy from sound waves.

Larger clusters of the powder accumulate at the bottom of the fluidized bed (11) and may be removed manually as part of a batch operation. For larger-scale operations, this may be automated by providing a powder removal and recycling capability.

### Other Size Discrimination and Feeding Methods

Another method of discriminating the size of particles and preferentially feeding nano-sized or ultrafine particles is by screening the powder using a micron sieve. A sieve (perforated plate or screen) can be used to screen out larger particles, collecting and feeding only the smaller particles based on the size of the openings in the sieve. This can be used as an option for any of the pre-deposition treatment methods described herein.

Still other methods for separating and feeding particles of a certain size range include use of gravity, buoyancy, and/or centrifugal forces to separate particles of different sizes. One example is to entrain the particles in a fluid stream (using air, nitrogen or other gas), and turn the direction of this stream such that larger particles are thrown to the outside where they are removed and recycled, while smaller particles are carried downstream to the deposition system 200. A second example is to create a low-velocity upward flow of particles entrained in a gas such that buoyancy tends to cause smaller particles to rise while larger particles tend to fall due to gravity forces exceeding buoyancy forces. Smaller particles are removed from the top or side and fed to the deposition system 200.

### De-Agglomeration

Methods for de-agglomerating particles are described below. These may be applied independent of any deposition system. Some of these methods of de-agglomeration will be described later in conjunction with integrated pre-treatment and deposition methods, and apparatus for performing pre-treatment and deposition.

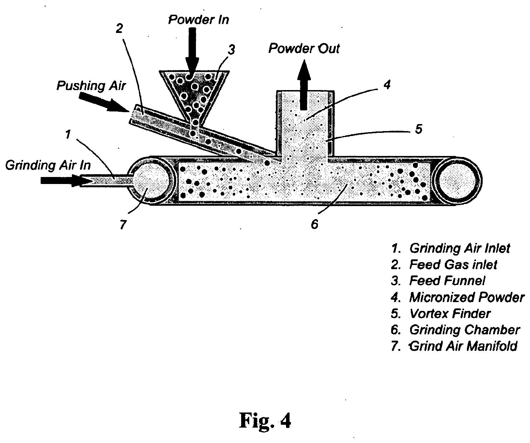

One method for de-agglomeration is use of a jet mill to break up clusters through impingement from a high-pressure gas jet. The gas may be air, nitrogen, or any of a variety of other suitable gases. Figure 4 illustrates the jet mill. Dry powder enters the mill through a feed funnel (3). Two sources of air (or other gas) are provided, one as pushing air and the other as grinding air. Pushing air enters at the feed gas inlet (2), and it carries the incoming powder to the grinding chamber (6). Grinding air enters at the grinding air inlet (1) and is distributed around the chamber by the grind air manifold (7). Aerodynamic forces produced by the grinding air cause impact of the mixture of pushing air and powder particles against a solid wall or impingement pivots. This causes agglomerations to be broken apart, resulting in finer particles that collect at the center of the grinding chamber. These are picked up by the vortex finder (5), and the fine (or micronized) powder particles (4) then exit the mill via the powder outlet.

A second method for de-agglomeration is to disperse the particles in a liquid where the liquid has certain properties that promote dispersion and de-agglomeration. For example, we have used a solvent such as ethanol, combined with a surfactant that is "neutral" or bipolar. The liquid dispersion can be coupled with sonication to help achieve and maintain the desired dispersion of particles in the liquid. The liquid dispersion can be fed directly to the deposition system (e.g., for liquid ESC) or dried prior to feeding the material to the deposition system (e.g., for dry ESC).

A third method of de-agglomeration is to disperse the particles in a liquid as noted above, and then further de-agglomerating and drying the particles using an ultrasonic spray drying technique prior to feeding the dry powder to the deposition system. Ultrasonic spray drying involves use of an ultrasonic spray nozzle, which atomizes the liquid dispersion and in the process breaks up agglomerations through the action of the ultrasonic vibration. The droplets exit the ultrasonic nozzle and are then dried (e.g., via a cyclone dryer), evaporating the-carrier liquid and leaving the fine particles behind in dry form. These are then carried in a gas stream to the deposition system. In addition to de-agglomerating the particles, ultrasonic spray also helps produce particles of uniform size by creating droplets of uniform size.

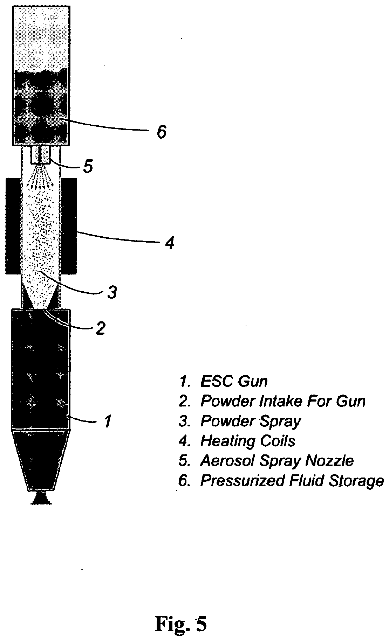

A fourth method of de-agglomeration is to create an aerosol that is fed to the deposition system 200. Figure 5 illustrates this, showing one suitable apparatus for creating an aerosol. Powder is dispersed in a liquid (see discussion above regarding choice of suitable liquids for dispersion) and stored in a pressurised fluid storage chamber (6). The chamber may be pressurized using an over-pressure of air, nitrogen, or other suitable gas. The pressurized liquid with entrained particles becomes an aerosol as it exits the chamber via the aerosol spray nozzle (5). The aerosol is then heated using heating coils (4) such that the liquid is evaporated, leaving dry particles in a powder spray (3). The powder spray from the aerosol unit is directly connected to the inlet of the ESC gun (1) for electrostatic deposition. The flowrate of the mixture may be adjusted by modifying the pressure and/or the nozzle flow characteristics. The speed of evaporation may be accelerated or retarded by adjusting the power to the heating coil.

Combinations of the above-described methods also may be used. For example, one combined method of de-agglomeration is to first disperse the particles in a liquid to break up tightly-bound agglomerates (see discussion above for desirable liquid properties), then remove the liquid to dry the particles (at which point they may tend to re-agglomerate but in loosely-bound clusters), and then use a jet mill as a final step to break up any loosely-bound agglomerates that formed during or after drying. We have used this method successfully for pre-deposition treatment of cubic boron nitride powder prior to electrostatic spray deposition (see discussion of integrated pre-treatment and deposition below). The method we have used involves specifically the following steps:
1. Disperse cBN powder received from the manufacturer in a mixture of ethanol and a neutral or bipolar surfactant, for example Zonyl (made by DuPont) - we have used a mass ratio of surfactant to powder of about 0.5∼1.5%.
2. Manually stir the liquid suspension, and then use vibration or ultrasonication to further ensure a uniform dispersion.
3. Dry the mixture in a container on a hot plate. To speed up the drying and also prevent humidity incursion, apply a flushing gas (we have used nitrogen at 50-70 deg. C with controlled humidity/dewpoint) through several nozzles located around the periphery of the open container. Manually stir the mixture during drying to reduce caking. Note that for scale-up to production levels, this operation could be automated.
4. Manually break up the resulting caked material using a mortar and pestle so that the result is a dry, loose powder that can be poured.
5. Pour the powder into the funnel of the jet mill, weighing the portions that are added so that the amount of material deposited can be controlled. For scale-up, this can be automated with a powder measurement unit (PMU).

For those methods that use liquid dispersion, the liquid dispersion can be coupled with sonication to help achieve and maintain the desired dispersion of particles in the liquid.

### Functionalization

Functionalization of particles prior to deposition can allow coatings to be created for specific functions, or otherwise improve the characteristics of the resulting coating. Functionalization is typically realized by introducing a second phase or mixed phases of materials. For example, cubic boron nitride (cBN) particles can be over-coated with titanium nitride (TiN), titanium aluminum nitride (TiAIN), or aluminum oxide (Al₂O3) to improve the flowability of cBN particles and to increase the resistance of the coating to oxidization (for the case of TiAIN overcoating). Functionalization also can introduce a guest material (such as silica in ultrafine particle size) that is stable and provides effective spacing between host material particles, reducing the chances of agglomeration. This will further help to improve powder coating surface quality such as surface roughness.

One method of functionalizing particles, including nanoparticles, microparticles, and combinations thereof, is to over-coat the particles with other materials chosen for specific functionality. A second method of functionalizing particles is to disperse them in a liquid containing a surfactant, where the carrier liquid and surfactant are chosen to provide a stable dispersion. The liquid dispersion can be fed to the deposition system 200 as a liquid dispersion (e.g., for liquid ESC) or dried prior to feeding the material to the deposition system (e.g., dry ESC). Liquid dispersion can be coupled with sonication to help achieve and maintain the desired dispersion of particles in the liquid.

### Additional Pre-Deposition Treatment Methods

Other pre-deposition treatment methods also can be used for pre-processing the coating materials prior to deposition, either alone or in combination with the methods described above. For example, the powder can be pre-heated to help drive moisture from the powder material. Ball milling also may be used to break up agglomerates and adjust the size of the powder particles provided to the deposition system.

### Methods and Apparatus for Coating Deposition

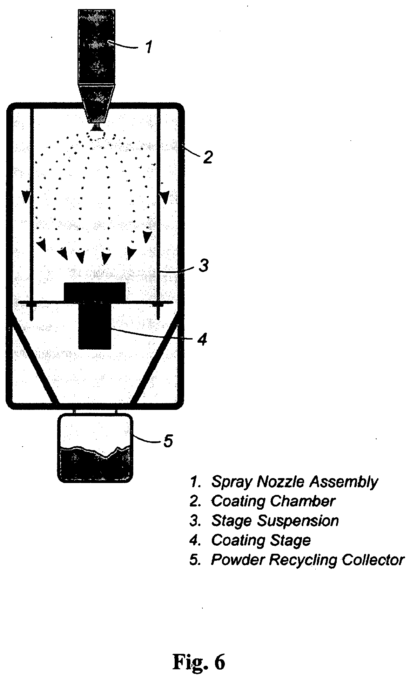

Figure 6 illustrates a deposition chamber that can be used for electrostatic spray coating (ESC) as well as other coating or deposition methods. A spray nozzle assembly (1) is mounted such that it sprays coating material (dry powder or liquid suspension containing particles) into the coating chamber (2). The spray nozzle assembly may employ electrostatic, ultrasonic, or ultrasonic plus electrostatic deposition means. The substrate(s) or part(s) to be coated are placed on a stage (4) that is suspended in the chamber using a stage suspension assembly (3). The orientation of the stage may be fixed or, as an option, a rotating stage may be used as described further herein. The distance between the stage and the spray nozzle can be adjusted.

The chamber is sealed so as to prevent egress of the coating material or ingress of contaminants. Material that is not deposited on the substrate(s) is collected in a powder recycling collector (5) so that material may be recycled. In the preferred embodiment, the unused material exits the sealed chamber via a liquid bath or other filtering means so that the material is captured for re-use and is prevented from being released to the environment.

In a preferred embodiment, the adjustments provided on the stage suspension assembly (3) are located external to the chamber by extending the assembly through the top of the chamber through openings that are sealed using O-ring type seals or other sealing means. With this design, adjustments in stage-to-nozzle distance can be made without opening the chamber.

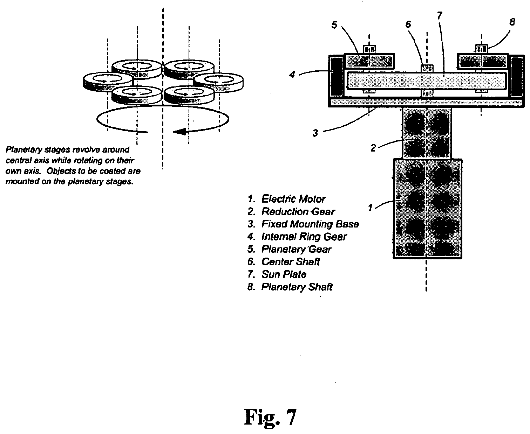

Figure 7 illustrates the rotating stage that is used as an option to improve uniformity of deposition across the surface of the substrate. The rotating stage can be used with electrostatic spray and other deposition methods. An electric motor (1) drives the apparatus through a reduction gear (2), causing the center shaft (6) to rotate. A sun plate (7) is attached to the center shaft (6) and rotates with the shaft. A number of planetary gears (5) are mounted to the sun plate (7) using planetary shafts (8). The planetary gears mesh with an internal ring gear (4) that is mounted to the fixed mounting base (3). In one embodiment shown in the figure, six planetary gears are used.

As the sun plate rotates, the planetary gears move around the central axis of the assembly and, due to their interaction with the internal ring gear, the planetary gears also rotate on their own axes. Substrates are mounted on the individual planetary gear stages. The dual rotation action enhances the uniformity of the deposition on the substrate by ensuring that all points on the surface of the substrate are exposed equally to the material spray.

The planetary and ring gears can mesh using conventional gear teeth, or the planetary gears can be made as rollers that are pressed outward (e.g., by springs) such that the outer edge of each roller contacts the surface of the internal ring gear and friction causes the planetary gears to rotate.

For any type of electrostatic deposition, the planetary gears must be grounded in order to ground the substrate that is mounted on them. This requires that a means be provided to electrically connect the planetary gears to a grounded member. In one embodiment in which the planetary gears are rollers, the springs that press against the planetary gear shafts and hold the planetary gears against the internal ring gear also act as brushes to make an electrical connection between the planetary gears and the rest of the grounded rotating stage assembly.

The speed of the electric motor can be adjusted to ensure that the substrate to be coated is exposed to all parts of the deposition spray pattern equally in order to achieve the desired uniformity of coating. The speed can be adjusted by changing the power input (voltage) to the DC motor. In the specific embodiment shown in the figure, the ratio of the rotational speed of the planetary gears to that of the overall sun plate is fixed by the gear ratio. However, in alternative embodiments one or more additional motors or other means can be provided such that the two speeds can be adjusted independently.

The rotating stage also can be translated by mounting it on an appropriate platform that is moved laterally in either the x or the y direction, and the stage also can be translated in the z-axis direction (vertical direction in the figure), moving the rotating stage closer to or further away from the spray source.

### Integrated Pre-Treatment and Deposition Methods and Apparatus

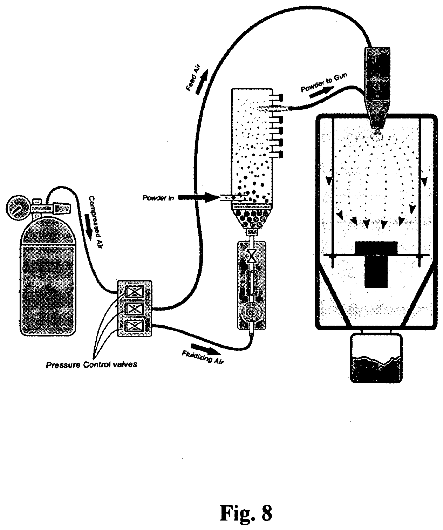

Figure 8 illustrates an electrostatic spray coating (ESC) system integrated with a fluidizer for pre-deposition treatment of the powder. Compressed air, nitrogen or other suitable gas is fed to a set of pressure control valves. These valves control the air to the fluidizer and the feed air to the ESC gun. By combining fluidization with ESC deposition, agglomeration of the dry powder particles is reduced and ultrafine particles are preferentially fed to the ESC gun. This system has been used to provide uniform deposition of powders such as hydroxyapatite on substrates including titanium implants for biomedical applications. The system is suitable for use with many other materials and applications.

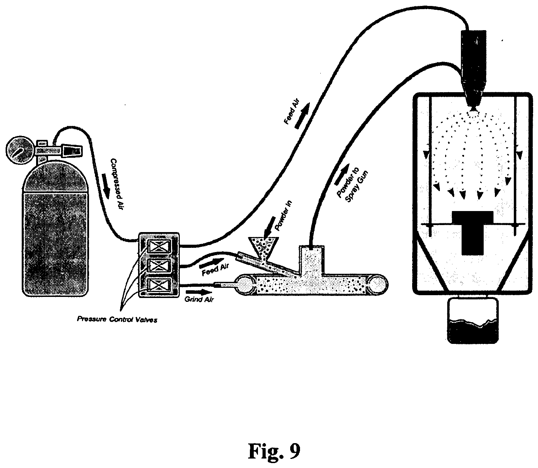

Figure 9 illustrates an electrostatic spray coating (ESC) system with integrated jet mill for de-agglomeration of the incoming powder material. Compressed air, nitrogen or other suitable gas is provided to a set of pressure control valves. These valves control the feed air to the ESC gun, and both feed air and grinding air to the jet mill. Dry powder is fed to the powder inlet of the jet mill. The grinding action of the jet mill breaks up agglomerates, and fine powder particles are carried by the feed air out of the jet mill directly to the ESC gun. Commercially-available jet mills typically incorporate a cyclone powder collector with a collection bag for capturing the milled powder. In this invention, the cyclone and bag are removed and a custom-designed coupling is used to connect the jet mill output directly to the input hose connection of the ESC gun. The pressure control valves are used to adjust the overall air pressure applied, and the relative pressures applied in grinding and 'pushing' (feed air) through the jet mill. This allows adjustment of the balance between pushing and grinding forces in the jet mill, and adjustment of the balance between aerodynamic forces and electrostatic forces during particle deposition in the ESC chamber. ESC guns typically use a much lower air pressure than is used in a jet mill. Electrostatic forces dominate the particle deposition. By coupling the jet mill directly to the ESC gun the aerodynamic forces play a much larger role. We have found that the increased aerodynamic forces provide a much more uniform coating deposition. This is likely due in part to the fact that the electrostatic field lines are not uniform at the substrate, due to non-uniformities in the surface characteristics of the substrate. The aerodynamic forces tend to overcome these non-uniformities by reducing the influence of electrostatic forces in the deposition. This result, significantly improving uniformity of deposition owing to increased aerodynamic forces relative to electrostatic forces, was unexpected. Integration of the jet mill with the ESC system provides de-agglomeration of the incoming powder particles, which by itself improves coating uniformity, and further improves uniformity of particle deposition through the increased influence of aerodynamic forces.

Other optional features that can be included in the system described here are:
- Pre-heating of the carrier gas, when desired for specific applications;
- Automatic feed of the powder material to the system, and automatic measurement of powder quantity (e.g., using a powder measurement unit) and other key variables such as temperature, pressure, etc.; also, automation of the substrate rotation/translation;
- Use of a sieve as a further means of screening and separating particle sizes so that desired sizes of particles can be preferentially fed to the system;
- Vibration and sloped surface design to help prevent accumulation of powder on feed surfaces;
- Additional translation (in the x, y and/or z directions) of the substrate or ESC gun or both, to allow deposition on large surfaces; and
- Use of multiple guns to allow coating large surfaces or complex geometries.

Commercially-available ESC guns can be used for the electrostatic spray coating systems described herein. However, the off-the-shelf guns commonly used for painting and powder coating have some disadvantages when applied for deposition of micro- and nano-sized particles. Specifically, the guns do not provide uniform flow within the passages internal to the gun, resulting in some spatial nonuniformity of the flow exiting the gun. Also, there are areas within the gun where powder tends to accumulate, which affects the ability to control the thickness of the deposition by controlling the mass of powder sent to the gun.

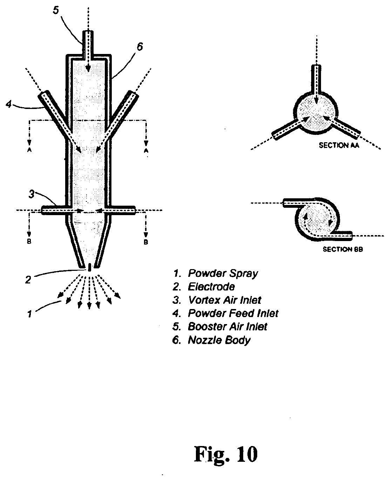

Figure 10 illustrates a modified gun design that resolves these problems. Like the commercially available guns, air or other gas under pressure is provided to the gun along with a powder feed. An electrode (2) located at the nozzle exit charges the particles as they exit the gun, producing a charged powder spray (1). However, in this case multiple powder feed inlets (4) are provided and they are angled in the direction of the flow, so that powder more easily joins the air flow path. In addition, by providing multiple inlets (three are provided in the example shown in the figure); powder is more uniformly distributed around the circumference of the flow path.

Also, two separate air inlets are provided. One is the booster air inlet (5), which provides the main feeding air for creating the electrostatic spray. In addition, air is provided to one or more vortex air inlets (3). In the example shown in the figure, two vortex air inlets are provided. These inlets are oriented such that air enters tangentially, creating a vortex within the ESC gun that helps to prevent powder accumulation on the surfaces of the nozzle body (6) and also helps maintain uniformity of the gas and powder mixture flow. The nozzle body is designed to have smooth surfaces with no crevices or cavities in which powder can accumulate.

## Claims

1. A method for coating a substrate with a deposition material, including the steps of:
(a) applying a pre-deposition treatment (100) to the deposition material (50), wherein applying a pre-deposition treatment includes the step of de-agglomerating the deposition material;
(b) directing the deposition material (150) onto the substrate (170) by means of electrostatic charging (200); wherein directing the deposition material (150) onto the substrate (170) includes directing the deposition material into an electrostatic gun (Fig. 5-1) through a plurality of powder feed inlets (Fig. 5-2), wherein the plurality of powder feed inlets (Fig. 5-2) are angled in the direction of air flow from the electrostatic gun (Fig. 5-1) and wherein directing the deposition material (150) onto the substrate (170) includes directing air into the electrostatic gun (Fig. 5-1) through a plurality of air inlets; and wherein the plurality of air inlets include a booster air inlet (Fig. 10-5), and directing the deposition material (150) onto the substrate (170) includes directing main feed air into the electrostatic gun through the booster air inlet, wherein the plurality of air inlets further comprise a vortex air inlet (Fig. 10-3), and directing the deposition material (150) onto the substrate (170) includes directing air into the electrostatic gun tangentially through the vortex air inlet, whereby a vortex is created within the gun; and
(c) applying an *in situ* treatment or a post-deposition treatment (300) to the substrate (270) whereby the deposition material is bound to the substrate.

2. A method as claimed in claim 1, wherein directing the deposition material (150) onto the substrate (170) includes the step of manipulating the substrate and wherein manipulating the substrate includes rotating the substrate on a stage.

3. A method as claimed in claim 1, wherein the deposition material (50) includes at least one of carbides, nitrides, carbonitrides, borides, oxides, sulphides, and/or silicides, optionally wherein the deposition material comprises boron nitride.

4. A method as claimed in claim 1, wherein applying an *in situ* treatment includes at least one of UV lights, electric stage laser sintering, and/or infrared sintering.

5. A method as claimed in claim 1, wherein applying a post-deposition treatment includes chemical vapour infiltration or sintering.

6. A method as claimed in claim 5, wherein the chemical vapour infiltration includes applying titanium nitride to the substrate or wherein the sintering includes at least one of of microwave sintering, laser sintering, and/or infrared sintering.

7. A method as claimed in claim 1, wherein the pre-deposition treatment (100) includes fluidizing the deposition material (50), optionally wherein the pre-deposition treatment includes fluidizing the deposition material aerodynamically, optionally wherein the fluidizing step includes vibrating the deposition material or sieving the deposition material.

8. A method as claimed in claim 1, wherein the de-agglomerating step is performed by means of a jet mill or by means of dispersing the deposition material in a dispersion liquid.

9. A method as claimed in claim 8, wherein the de-agglomerating step is performed by means of dispersing the deposition material in a dispersion liquid and the de-agglomerating step includes applying sonication to the dispersion liquid or wherein the de-agglomerating step includes aerosolizing the dispersion liquid and/or including the step of applying an ultrasonic vibration to the dispersion liquid.

10. A method as claimed in claim 1, wherein the pre-deposition step includes the step of functionalizing the deposition material, optionally wherein the functionalization step includes overcoating the substrate or wherein the functionalization step includes dispersing the deposition material in a mixture comprising a liquid and a surfactant, optionally including the step of applying sonication to the mixture.

11. A method as claimed in claim 1, wherein the deposition material comprises micro-sized particles or nano-sized particles.

12. A method as claimed in claim 1, including directing an agent material to the substrate subsequent to applying a post-deposition treatment to the substrate, optionally wherein the agent material includes an active biological agent, optionally wherein the active biological agent includes a biocidal or an anti-bacterial agent, or optionally wherein the agent material includes a bone-morphogenic protein or a drug-carrying agent.

## Patentansprüche

1. Verfahren zum Beschichten eines Substrats mit einem Ablagerungsmaterial, umfassend die Schritte:
(a) Anwenden einer Vor-Ablagerungsbehandlung (100) auf das Ablagerungsmaterial (50), wobei das Anwenden der Vor-Ablagerungsbehandlung den Schritt des De-Agglomerierens des Ablagerungsmaterials umfasst;
(b) Zuführen des Ablagerungsmaterials (150) auf das Substrat (170) mittels elektrostatischer Aufladung (200), wobei das Zuführen des Ablagerungsmaterials (150) auf das Substrat (170) das Zuführen des Ablagerungsmaterials in eine elektrostatische Kanone (Fig. 5-1) durch eine Mehrzahl von Pulverzuführeinlässen (Fig. 5-2) umfasst; wobei die Mehrzahl der Pulverzuführeinlässe (Fig. 5-2) in Richtung der Luftströmung von der elektrostatischen Kanone abgewinkelt sind und wobei das Zuführen des Ablagerungsmaterials (150) auf das Substrat (170) das Zuführen von Luft in die elektrostatische Kanone (Fig. 5-1) durch eine Mehrzahl von Lufteinlässen umfasst; und wobei die Mehrzahl der Lufteinlässe einen Booster-Lufteinlass (Fig. 10-5) umfasst und das Zuführen des Ablagerungsmaterials (15) auf das Substrat (170) das Zuführen von Haupteinspeisungsluft in die elektrostatische Kanone durch den Booster-Lufteinlass umfasst, wobei die Mehrzahl der Lufteinlässe weiterhin einen Wirbellufteinlass (Fig. 10-3) aufweist und das Zuführen des Ablagerungsmaterials (150) auf das Substrat (170) das tangentiale Zuführen von Luft in die elektrostatische Kanone durch den Wirbellufteinlass umfasst, wobei der Wirbel innerhalb der Kanone erzeugt wird; und
(c) Anwenden einer In Situ - Behandlung oder einer Nach-Ablagerungsbehandlung (300) auf das Substrat (270), wobei das Ablagerungsmaterial in das Substrat gebunden wird.

2. Verfahren nach Anspruch 1, bei dem das Zuführen des Ablagerungsmaterials (150) auf das Substrat (170) den Schritt des Manipulierens des Substrats umfasst und wobei das Manipulieren des Substrats das Drehen des Substrats auf einer Stufe umfasst.

3. Verfahren nach Anspruch 1, bei dem das Ablagerungsmaterial (150) mindestens eines von Carbid, Nitrid, Carbonitrid, Borid, Oxid, Sulfid und/oder Silizid umfasst, optional, bei dem das Ablagerungsmaterial Bornitrid umfasst.

4. Verfahren nach Anspruch 1, bei dem die In-Situ-Behandlung mindestens eines von UV-Licht, elektrisches Stufen Lasersintern und/oder Infrarotsintern umfasst.

5. Verfahren nach Anspruch 1, bei dem das Anwenden einer Nach-Ablagerungsbehandlung die chemische Dampfinfiltration oder das Sintern umfasst.

6. Verfahren nach Anspruch 5, bei dem die chemische Dampfinfiltration das Aufbringen von Titannitrid auf das Substrat umfasst, oder bei dem das Sintern mindestens eines von Mikrowellensintern, Lasersintern, und/oder Infrarotsintern umfasst.

7. Verfahren nach Anspruch 1, bei dem die Vor-Ablagerungsbehandlung (100) das Fluidisieren des Ablagerungsmaterials (50) umfasst, optional, bei dem die Vor-Ablagerungsbehandlung das aerodynamische Fluidisieren des Ablagerungsmaterials umfasst, optional, bei dem der Fluidisierungsschritt das Vibrieren des Ablagerungsmaterials oder das Sieben des Ablagerungsmaterials umfasst.

8. Verfahren nach Anspruch 1, bei dem der De-Agglomerationsschritt mittels einer Strahlmühle oder mittels Dispergieren des Ablagerungsmaterials in einer Dispersionsflüssigkeit durchgeführt wird.

9. Verfahren nach Anspruch 8, bei dem der De-Agglomerationsschritt mittels Dispergierens des Ablagerungsmaterials in einer Dispersionsflüssigkeit durchgeführt wird und der De-Agglomerationsschritt das Anlegen einer Beschallung an die Dispersionsflüssigkeit umfasst, oder bei dem der De-Agglomerationsschritt das Aerosolisieren der Dispersionsflüssigkeit und/oder den Schritt des Anlegens von Ultraschallvibrationen an die Dispersionsflüssigkeit umfasst.

10. Verfahren nach Anspruch 1, bei dem der Vor-Ablagerungsschritt den Schritt des Funktionalisierens des Ablagerungsmaterials umfasst, optional, bei dem der Funktionalisierungsschritt das Überziehen des Substrats umfasst, oder bei dem der Funktionalisierungsschritt das Dispergieren des Ablagerungsmaterials in eine Mixtur umfasst, welche eine Flüssigkeit und ein Tensid aufweist, optional umfassend den Schritt des Anlegens einer Beschallung an die Mixtur.

11. Verfahren nach Anspruch 1, bei dem das Ablagerungsmaterial Partikel mit Mikrogröße oder Partikel mit Nanogröße aufweist.

12. Verfahren nach Anspruch 1, umfassend das Zuführen eines Agens-Materials zu dem Substrat nach dem Anwenden eine Nach-Ablagerungsbehandlung auf das Substrat, optional, bei dem das Agens-Material ein aktives biologisches Mittel umfasst, optional, bei dem das aktive biologische Mittel ein biozides oder ein antibakterielles Mittel umfasst, oder optional, bei dem das Agens-Material ein knochenmorphogenes Protein oder ein Arzneimittel tragendes Mittel umfasst.

## Revendications

1. Procédé pour revêtir un substrat par un matériau de dépôt, comprenant les étapes :
(a) appliquer un traitement de pré-dépôt (100) au matériau de dépôt (50), l'application d'un traitement de pré-dépôt comprenant l'étape de désagglomération du matériau de dépôt ;
(b) diriger le matériau de dépôt (150) sur le substrat (170) au moyen d'une charge électrostatique (200) ; diriger le matériau de dépôt (150) sur le substrat (170) comprenant diriger le matériau de dépôt dans un pistolet électrostatique (Fig.5-1) à travers une pluralité d'entrées d'alimentation de poudre (Fig.5-2), les différentes entrées d'alimentation de poudre (Fig.5-2) étant inclinées dans la direction d'écoulement d'air à partir du pistolet électrostatique (Fig.5-1), et diriger le matériau de dépôt (150) sur le substrat (170) comprenant diriger de l'air dans le pistolet électrostatique (Fig.5-1) à travers une pluralité d'entrées d'air ; et les différentes entrées d'air comprenant une entrée d'air de suralimentation (Fig.10-5), et diriger le matériau de dépôt (150) sur le substrat (170) comprenant diriger l'air d'alimentation principal dans le pistolet électrostatique à travers l'entrée d'air de suralimentation, les différentes entrées d'air comprenant en outre une entrée d'air à tourbillon (Fig.10-3), et diriger le matériau de dépôt (150) sur le substrat (170) comprenant diriger de l'air dans le pistolet électrostatique de manière tangentielle à travers l'entrée d'air à tourbillon, ce par quoi un tourbillon est créé à l'intérieur du pistolet ; et
(c) appliquer un traitement *in situ* ou un traitement post-dépôt (300) au substrat (270), ce par quoi le matériau de dépôt est lié au substrat.

2. Procédé selon la revendication 1, dans lequel diriger le matériau de dépôt (150) sur le substrat (170) comprend l'étape de manipulation du substrat, et la manipulation du substrat comprenant faire tourner le substrat sur une platine.

3. Procédé selon la revendication 1, dans lequel le matériau de dépôt (50) comprend au moins un parmi les carbures, les nitrures, les carbonitrures, les borures, les oxydes, les sulfures et/ou les siliciures, le matériau de dépôt comprenant facultativement du nitrure de bore.

4. Procédé selon la revendication 1, dans lequel appliquer un traitement *in situ* comprend au moins un parmi des lumières UV, un frittage laser à phase électrique et/ou un frittage infrarouge.

5. Procédé selon la revendication 1, dans lequel appliquer un traitement post-dépôt comprend une infiltration en phase vapeur ou un frittage.

6. Procédé selon la revendication 5, dans lequel l'infiltration en phase vapeur comprend appliquer du nitrure de titane au substrat, ou dans lequel le frittage comprend au moins un parmi un frittage à micro-ondes, un frittage laser et/ou un frittage infrarouge.

7. Procédé selon la revendication 1, dans lequel le traitement de pré-dépôt (100) comprend fluidiser le matériau de dépôt (50), le traitement de pré-dépôt comprenant facultativement fluidiser le matériau de dépôt de manière aérodynamique, l'étape de fluidisation comprenant facultativement faire vibrer le matériau de dépôt ou tamiser le matériau de dépôt.

8. Procédé selon la revendication 1, dans lequel l'étape de désagglomération est réalisée au moyen d'un broyeur à jet ou au moyen d'une dispersion du matériau de dépôt dans un liquide de dispersion.

9. Procédé selon la revendication 8, dans lequel l'étape de désagglomération est réalisée au moyen d'une dispersion du matériau de dépôt dans un liquide de dispersion, et l'étape de désagglomération comprend appliquer une sonication au liquide de dispersion, ou dans lequel l'étape de désagglomération comprend aérosoliser le liquide de dispersion et/ou comprend l'étape d'application d'une vibration ultrasonore au liquide de dispersion.

10. Procédé selon la revendication 1, dans lequel l'étape de pré-dépôt comprend l'étape de fonctionnalisation du matériau de dépôt, l'étape de fonctionnalisation comprenant facultativement recouvrir le substrat ou l'étape de fonctionnalisation comprenant disperser le matériau de dépôt dans un mélange comprenant un liquide et un agent tensioactif, comprenant facultativement l'étape d'application d'une sonication au mélange.

11. Procédé selon la revendication 1, dans lequel le matériau de dépôt comprend des microparticules ou des nanoparticules.

12. Procédé selon la revendication 1, comprenant diriger un matériau d'agent sur le substrat après l'application d'un traitement post-dépôt sur le substrat, le matériau d'agent comprenant facultativement un agent biologique actif, l'agent biologique actif comprenant facultativement un agent biocide ou antibactérien, ou le matériau d'agent comprenant facultativement une protéine de morphogénèse de l'os ou un agent portant un médicament.
